# EUROPÄISCHE PATENTANMELDUNG

(11) **EP 2 439 125 A2**
(43) Veröffentlichungstag der Anmeldung: **11.04.2012**
(21) Anmeldenummer: 11184758.8
(22) Anmeldetag: 11.10.2011
(51) Int. Cl.: B62B 3/14

(54) **Fahrgestell für einen stapelbaren Einkaufswagen**

(30) Priorität: 11.10.2010 DE 202010008763 U; 03.12.2010 DE 202010013061 U
(71) Anmelder: J.D. Geck GmbH, 58762 Altena (DE)
(72) Erfinder: Kroker, Thomas, 58513 Lüdenscheid (DE)
(74) Vertreter: Tarvenkorn, Oliver

(57) **Zusammenfassung**

Ein stapelbares Fahrgestell (10) für einen Einkaufswagen umfasst wenigstens zwei nach vorn weisende Träger (11, 12), von denen wenigstens die in Fahrtrichtung gesehen vorderen Trägerabschnitte (13, 14), an deren Enden jeweils eine vordere Rolleneinheit (1, 2) angeordnet ist, in einem spitzen Winkel α zueinander ausgerichtet sind. Die vorderen Rolleneinheiten (1, 2) sind seitlich neben den vorderen Trägerabschnitten (13, 14) angeordnet.

## Beschreibung

Die Erfindung betrifft ein stapelbares Fahrgestell für einen Einkaufswagen, welches wenigstens zwei nach vorn weisende Träger umfasst, von denen wenigstens die in Fahrtrichtung gesehen vorderen Trägerabschnitte, an deren Enden jeweils eine vordere Rolleneinheit angeordnet ist, in einem spitzen Winkel α zueinander ausgerichtet sind.

Bei den bekannten Fahrgestellen für Einkaufswagen verlaufen die seitlichen Träger immer geradlinig von den hinteren Rollenaufnahmen zu den vorderen Rollenaufnahmen. Dies hat den Nachteil, dass der Winkel, der dabei zwischen den Trägern entsteht, das beim Ineinanderschieben der Wagen erreichbare Stapelmaß deutlich begrenzt, da irgendwann der Punkt erreicht wird, an dem die Träger aneinander stoßen, und somit ein tieferes Einschieben des hinteren Wagens nicht mehr möglich ist.

Die hintere Breite der Einkaufswagen sollte stets so schmal wie möglich sein, insbesondere sollte sie nicht über 600 mm betragen, damit man mit dem Einkaufswagen auch in schmalen Gängen in einem Laden gut rangieren kann. Gleichzeitig sollten die Rolleneinheiten möglichst direkt unter den vorderen Ecken des aufzusetzenden Drahtkorbes platziert sein. Um die Standsicherheit zu gewährleisten, kann das Stapelmaß also nicht einfach über eine Verkürzung des Fahrgestells oder eine Verringerung der vorderen Spurweite reduziert werden.

Ein weiterer Nachteil besteht darin, dass sich die Fahrgestelle beim Ineinanderschieben allein über die in einem spitzen Winkel, pfeilförmig zueinander angestellten Träger zentrieren. Dies bedeutet, dass die vorderen, abgerundeten Ecken des einen Fahrgestells regelmäßig gegen die Träger eines zweiten, vorne stehenden Fahrgestells stoßen und über die inneren Flanken des zweiten Fahrgestells in die Längsachse des Stapels von Fahrgestellen bzw. Einkaufswagen zurückgeführt wird.

Die Träger können sich dabei auch ineinander verkeilen, insbesondere wenn zwei Fahrgestelle mit großer Wucht ineinander geschoben werden. Verkeilte Fahrgestelle sind nicht nur vom Kunden schwer wieder voneinander zu trennen. An den Kontaktflächen der Träger besteht eine erhöhte Gefahr der Spaltkorrosion, gerade im Winter bei Einfluss von Streusalz. Bei der Berührung der Fahrgestelle beim Stapeln kommt es außerdem regelmäßig zur Abnutzung oder sogar zur Beschädigung der meist verzinkten Metalloberfläche der Träger.

Wenngleich das Stapelmaß für die Benutzung des Einkaufswagens durch den Kunden kaum eine Rolle spielt, hat dieses einen konkreten Einfluss auf die Wirtschaftlichkeit für den Hersteller der Einkaufswagen wie für den Handel, der diese für seine Kunden bereitstellt. Ein großes Stapelmaß führt bei gegebener Länge eines Laderaums dazu, dass bei Auslieferung durch den Hersteller entsprechend weniger Einkaufswagen z. B. im Seecontainer oder im LKW transportiert werden können. Im Handel können in den für die Abstellung vorgesehenen Gassen weniger Einkaufswagen geparkt werden bzw. umgekehrt ist eine längere Gasse oder ein größerer Transportraum erforderlich, wenn eine bestimmte Anzahl von Einkaufswagen darin vorgehalten bzw. transportiert werden soll.

Aufgabe der vorliegenden Erfindung ist es somit, bei einem Fahrgestell für einen Einkaufswagen der eingangs genanten Art das Stapelmaß zu reduzieren sowie eine direkte Berührung der Fahrgestelle beim Stapeln zu vermeiden und dadurch auch ein Verkeilen von Fahrgestellen zu vermeiden.

Diese Aufgabe wird erfindungsgemäß dadurch gelöst, dass die vorderen Rolleneinheiten seitlich neben den vorderen Trägerabschnitten angeordnet sind.

Dadurch, dass die Rollen nicht mehr unterhalb der Träger angeordnet sind, sondern nach seitlich außen versetzt positioniert sind, ist es möglich, Fahrgestelle ineinander zu stapeln, ohne dass sich die Träger berühren. Dabei kann die optimale Positionierung der Rollen unterhalb der Ecken des auf das Fahrgestell aufzusetzenden Drahtkorbs beibehalten werden, so dass die Standsicherheit nicht beeinträchtigt ist.

Die Begrenzung kann vielmehr direkt zwischen den Rollen erreicht werden, insbesondere wenn das Stapelmaß der Fahrgestelle kleiner als oder gleich wie der Achsabstand von zwei in Fahrtrichtung aneinander gereihten Rolleneinheiten. Die Rolle bzw. die gesamte Rolleneinheit eines hinteren Fahrgestells stößt also gegen die Rolle bzw. gegen Rolleneinheit eines vorderen im Stapel angeordneten Fahrgestells. Die Rollen bzw. Rolleneinheiten berühren sich dabei nur mit ihren Laufflächen, die ohnehin Verschleißteile darstellen.

"Stapelmaß" ist der Längenunterschied, um den sich ein Stapel von Fahrgestellen jeweils verlängert, wenn ein weiteres Fahrgestell eingeschoben wird.

Als "Rolleneinheit" wird zunächst ein Laufrollenkörper mit einer Achse verstanden und zusätzlich ein Lagerungselement zur Lagerung der Rolle am Fahrgestell, insbesondere auch ein solches mit einer Pendelachseneinheit, die das Pendeln der Rolle um eine vertikale Achse erlaubt.

Gemäß der Erfindung können die Träger in einem spitzeren Winkel nach vorne geführt werden als bei den aus dem Stand der Technik bekannten Fahrgestellen. Das führt dazu, dass das Fahrgestell im vorderen Bereich der Träger deutlich schlanker ist als bei herkömmlichen Fahrgestellen, wodurch das Stapelmaß reduziert ist. Mit dem größeren Winkel wird auch die Gefahr des Verkeilens von Fahrgestellen reduziert.

Die Anbindung der vorderen Rollen erfolgt nicht mehr direkt unter dem Träger oder im Zwischenraum zwischen den Trägern, sondern durch längere, überstehende Aufnahmeelemente seitlich davon.

Dieser neue, steilere Winkel der vorderen Abschnitte der Träger ermöglicht ein wesentlich kleineres Stapelmaß und dient als entscheidender Vorteil, sowohl beim Transport der Einkaufswagen, als auch beim Aufstellen beim Kunden vor Ort, da bei gleichem Platzbedarf wesentlich mehr Wagen in einer Reihe stehen können. Erfindungsgemäß kann eine Reduktion des Stapelmaßes von mindestens 30% bis 40% erreicht werden.

Mit einem 40-Fuß-Seecontainer können so etwa ein Drittel mehr Einkaufswagen transportiert werden. Dies bedeutet andererseits, dass eine Sendung, die sonst vier Container benötigte, nun in drei Containern zu versenden ist, so dass die Transportkosten proportional reduzierbar sind.

Die erfindungsgemäße Verlagerung der Rolleneinheiten nach außen führt außerdem dazu, dass die Zentrierung beim Stapeln vorrangig durch die Rolleneinheiten selber erfolgt, und eine Berührung der Träger allenfalls noch dann erfolgen kann, wenn der Benutzer einen mit dem erfindungsgemäßen Fahrgestell ausgerüsteten Einkaufswagen in einer extremen Schiefstellung von hinten in den Stapel einschiebt. Ansonsten bilden die dicht an dicht hintereinander stehenden hinteren Rolleneinheiten eine Gasse, in der die vorderen Rolleneinheiten laufen können und nach innen abgelenkt werden, bevor eine Berührung der Träger untereinander überhaupt möglich ist.

Auch wenn gemäß der Erfindung der Abstand der Träger im vorderen Bereich erst einmal von der Spurweite der Rolleneinheiten abgekoppelt ist, so sollte im Sinne der Stabilität des Fahrgestells der Abstand der Träger im vorderen Bereich dennoch so groß sein wie es unter Beibehaltung der erfindungsgemäßen Vorteile möglich ist, damit die nach außen vorkragenden Aufnahmeelemente nicht zu stark auf Biegung belastet werden. Im Idealfall sind die erfindungsgemäßen Fahrgestelle so aufeinander abgestimmt, dass auch in einer dichten Stapellage, deren Stapelmaß durch den Durchmesser der voreinander stoßenden Rolleneinheiten bestimmt ist, gleichzeitig zumindest die jeweiligen vorderen Trägerabschnitte dicht voreinander liegen.

Wenn von hinten ein Fahrgestell in einen Stapel eingeschoben wird, kann es nur dann dazu kommen, dass sich die Fahrgestelle direkt mit ihren Trägern berühren, wenn die Rolleneinheiten eines vorderen Fahrgestells im Stapel irgendwie seitlich ausgelenkt sind, so dass der ansonsten durch die Rolleneinheiten selbst vorgegeben Abstand nicht eingehalten ist.

Um auch für diesen Fall der Gefahr des Verkeilens der Fahrgestelle entgegenzuwirken, ist insbesondere vorgesehen, dass zumindest die vorderen Trägerabschnitte einen langgestreckten Profilquerschnitt aufweisen, wobei die langen Profilachsen zumindest in den vorderen Bereichen der Träger um einen Winkel β = 10°... 30° gegenüber einer Vertikalen geneigt angeordnet sind. Der Vorteil einer solchen Ausbildung der Träger ergibt sich wie folgt: Wird ein Fahrgestell von hinten mit großer Wucht in einen Stapel von weiteren Fahrgestellen geschoben, führt die Profilschrägstellung gegenüber der Vertikalen dazu, dass nicht nur an beiden Seiten aufeinander zu gerichtete horizontale Klemmkräfte entstehen, sondern dass sich auch eine vertikale Kraftkomponente ergibt, die das Fahrgestell von unten unter die Träger des vorderen Fahrgestells schiebt. Der Impuls, der von einem hinten eingeschobenen Fahrgestell ausgeht, führt somit theoretisch zu einer vertikalen Impulskomponente, also einem leichten Anheben des vorne stehenden Stapels. Praktisch tritt der Effekt aufgrund der hohen Masse, den ein Stapel von mehreren ineinander gestapelten Einkaufswagen besitzt, jedoch kaum in Erscheinung. Dafür wird dadurch aber wirksam verhindert, dass sich die pfeilförmigen vorderen Bereiche ineinander verklemmen.

Der Versatz der Rollen nach außen kann dadurch erfolgen, dass an den vorderen Enden der vorderen Trägerabschnitte jeweils wenigstens ein nach außen kragendes Aufnahmeelement vorgesehen ist, an dem die Pendelachsen der vorderen Rollen gelagert sind.

Alternativ kann ein durchgängiges Traversenelement vorgesehen sein, das an beiden Seiten jeweils bis über die vorderen Trägerabschnitte hinausläuft und das an dem jeweiligen Überstand eine Lagerung der Rolleneinheit ermöglicht.

Um die Berührung der Träger untereinander weitestgehend zu vermeiden und/oder um trotz der vorteilhaften erfindungsgemäßen Ausbildung der vorderen Abschnitte der Träger gleichzeitig hinten am Fahrgestell eine maximale Spurweite des Fahrgestells zu erreichen, kann auch vorgesehen sein, dass die Träger gekröpft sind oder konkav ausgebildet sind, wobei die konkave Seite jeweils nach außen weist. Dadurch muss der Verlauf der Träger, welcher für den vorderen Teil des Fahrgestells im Sinne der Erfindung vorteilhaft ist, nicht notwendigerweise auch hinten fortgesetzt werden.

Die Träger können aus einem Rohrprofil gebildet sein, aber auch aus parallel geführten Stahldrähten mit großem Durchmesser.

Weiterhin kann die erfindungsgemäße Ausbildung des Fahrgestells sowohl bei Einkaufswagen ohne untere Ablage verwendet werden wie auch bei Einkaufswagen mit einer solchen.

Wenn keine Ablage erforderlich ist, sind die Träger von wenigstens einem erhöhten Befestigungselement zur Verbindung mit einem Gitterkorb aus nach vorn und nach hinten abgespreizt und erstrecken sich schräg nach unten zu den Rolleneinheiten.

Weiterhin ist es möglich, das Fahrgestell wie an sich bekannt so auszubilden, dass sich die Träger von einem erhöhten Befestigungsbereich zur Verbindung mit einem Gitterkorb aus nach unten und im Wesentlichen parallel zur Fahrebene nach vorn zu den vorderen Aufnahmeelementen für die Rolleneinheiten erstrecken.

Der Unterschied in den Fahrgestelltypen, der von den erfindungsgemäßen Merkmalen unabhängig ist, liegt daran, dass die vorderen und hinteren Trägerabschnitte des Fahrgestells nach der zweiten Bauart im Wesentlichen in einer Ebene parallel zur Fahrebene angeordnet sind. Auch bei dieser Ausführungsform des Fahrgestells ist vorgesehen, dass die vorderen Trägerabschnitte in einem spitzen Winkel zueinander ausgerichtet sind und die vorderen Rolleneinheiten seitlich neben diesen vorderen Trägerabschnitten angeordnet sind. Hierdurch kann eine V-förmige Konfiguration der vorderen Trägerabschnitte erreicht werden, die fast dreieckig ausgebildet ist und bei der der eingeschlossene Winkel α mit vorzugsweise etwa 25°deutlich größer sein kann als bei den im Stand der Technik bekannten Fahrgestellen, bei welchen die vorderen Trägerabschnitte in einem wesentlich kleineren Winkel zueinander ausgerichtet sind, so dass der Abstand zwischen den Trägerabschnitten vorne am Fahrgestell deutlich größer ist als bei einem erfindungsgemäßen Fahrgestell. Durch die Vergrößerung des Winkels ist somit eine deutliche Verkürzung des Stapelweges zu erreichen.

Die Erfindung wird nachfolgend mit Bezug auf die Zeichnung näher erläutert. Die Figuren zeigen im Einzelnen:
- Fig. 1a - 1c: jeweils ein Fahrgestell gemäß dem Stand der Technik in perspektivischer Ansicht, in Draufsicht und in seitlicher Ansicht;
- Fig. 2a - 2c: jeweils ein erfindungsgemäßes Fahrgestell nach einer ersten Bauform in perspektivischer Ansicht, in Draufsicht und in seitlicher Ansicht;
- Fig. 3: das erfindungsgemäße Fahrgestell der ersten Bauform von vorn;
- Fig. 4: zwei ineinander gestapelte Fahrgestelle gemäß der ersten Bauform der Erfindung in perspektivischer Ansicht von schräg unten;
- Fig. 5: eine vergrößerte Detailansicht aus Fig. 4;
- Fig. 6: ein erfindungsgemäßes Fahrgestell nach einer zweiten Ausführungsform in perspektivischer Ansicht von oben;
- Fig. 7: das Fahrgestell aus Fig. 6 in perspektivischer Ansicht von unten;
- Fig. 8: das Fahrgestell aus Fig. 6 von unten;
- Fig. 9: ein erfindungsgemäßes Fahrgestell nach einer dritten Ausführungsform in perspektivischer Ansicht von oben;
- Fig. 10: das Fahrgestell aus Fig. 9 in perspektivischer Ansicht von unten; und
- Fig. 11: das Fahrgestell aus Fig. 9 von unten.

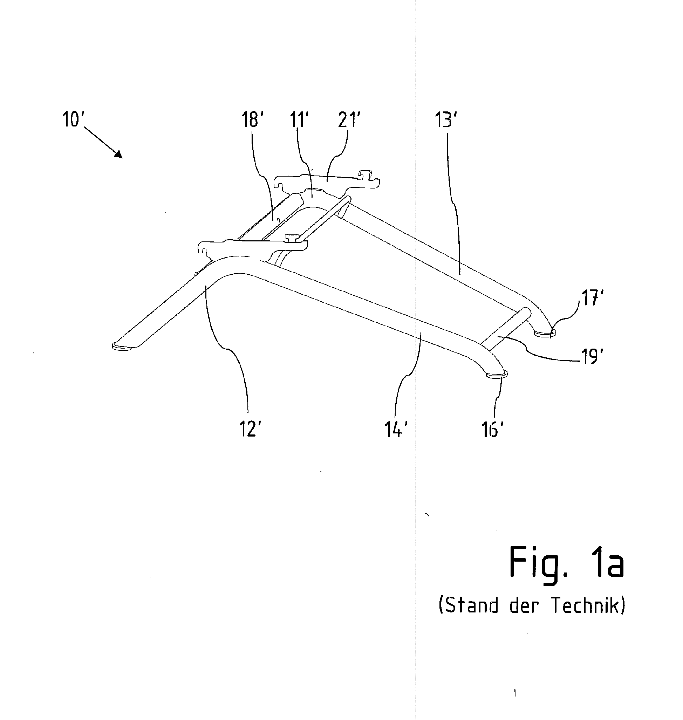

Die Figuren 1a bis 1c zeigen zunächst jeweils ein Fahrgestell 10' gemäß dem Stand der Technik, um im Nachfolgenden die Unterschiede zur Erfindung zu verdeutlichen.

Figur 1a zeigt ein herkömmliches Fahrgestell 10'. Dieses ist im Wesentlichen aus zwei Trägern 11', 12' in Rohrprofilform gebildet, die über Traversenelemente 18', 19' verbunden sind. In den oben liegenden Bereichen der Träger 11', 12' sind Verbindungslaschen 21' angeschweißt, die zur Aufnahme eines Drahtgitterkorbs dienen. Die Enden 16', 17' der vorderen Trägerabschnitte 13', 14' dienen der Aufnahme von hier nicht abgebildeten Rolleneinheiten. Gleiches gilt für die hinteren Enden der Träger 11', 12', die der Aufnahme von hinteren Rolleneinheiten dienen.

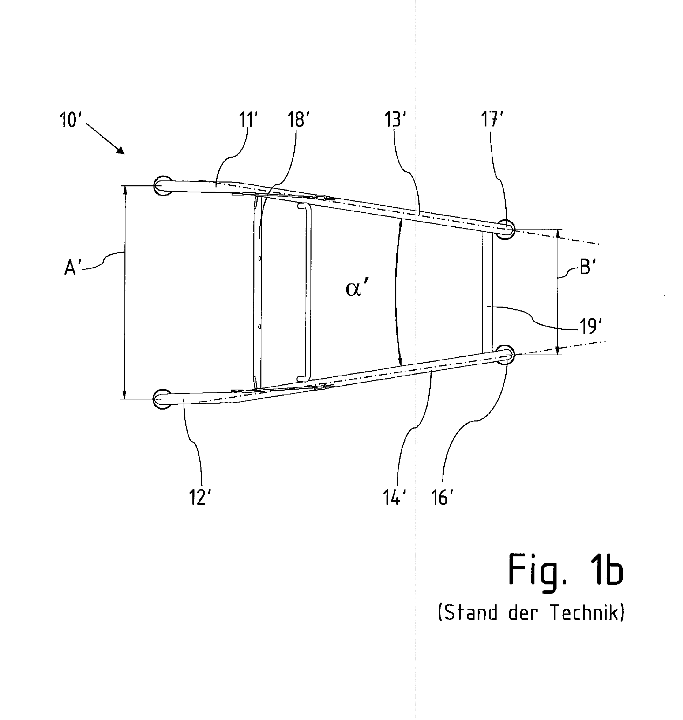

Figur 1b zeigt das herkömmliche Fahrgestell 10' von oben. An den hinteren Aufnahmen der Träger 11', 12' ergibt sich eine Spurweite A'. An den vorderen Aufnahmen 16', 17' für die Rolleneinheiten ergibt sich eine Spurweite B'. Die vorderen Trägerabschnitte 13', 14' sind in einem Winkel α' zueinander angestellt.

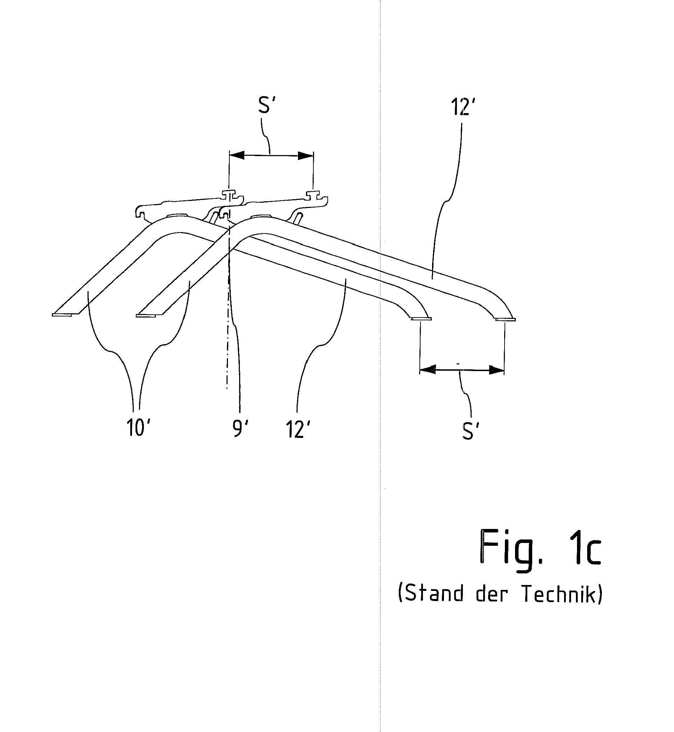

Figur 1c zeigt zwei ineinander geschobene Fahrgestelle 10' herkömmlicher Bauart. Da sich die Träger 12' der Fahrgestelle 10' an einem mit 9' bezeichneten Punkt berühren und verklemmen, können sie nicht weiter ineinander geschoben werden. Es ergibt sich ein Stapelmaß S'.

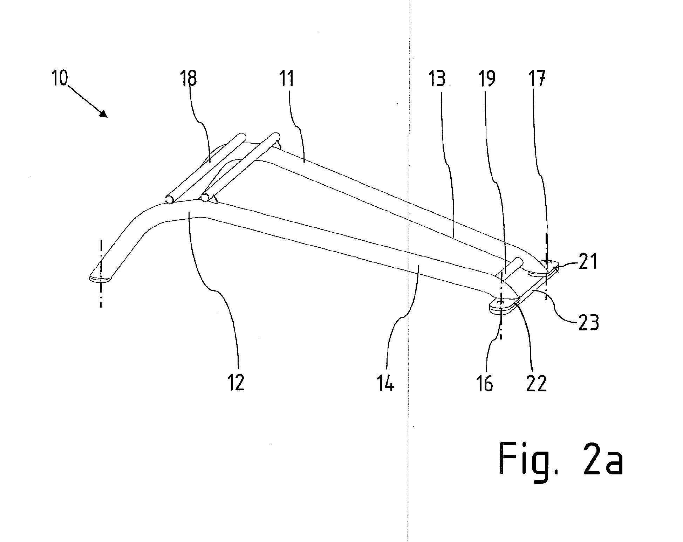

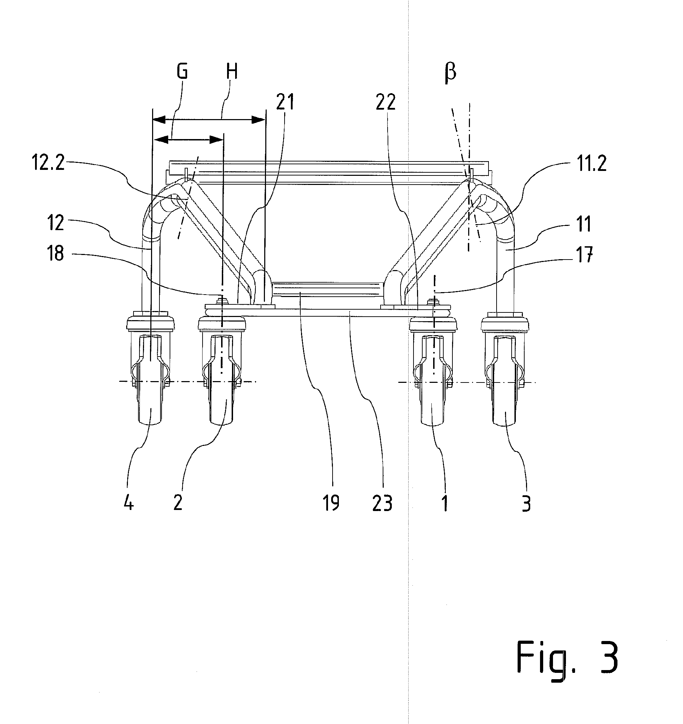

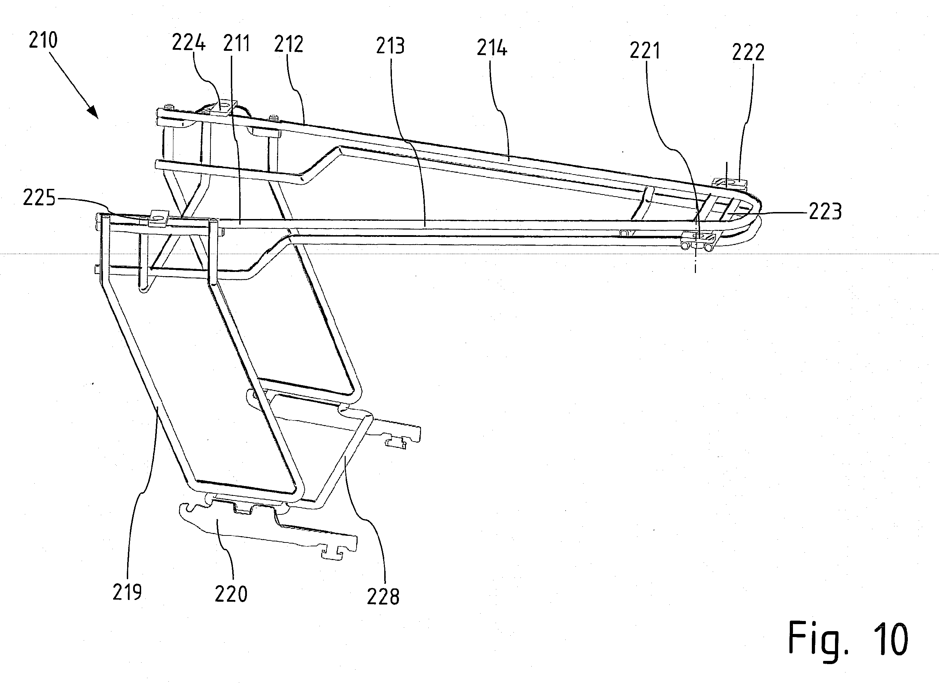

Die Figuren 2a bis 2c wie auch Figuren 3 bis 11 zeigen jeweils ein nach der Erfindung ausgebildetes Fahrgestell.

Figur 2a zeigt in perspektivischer Ansicht von vorne rechts ein Fahrgestell 10, das im Wesentlichen aus zwei Trägern 11, 12 mit vorderen Trägerabschnitten 13, 14 besteht. Die Träger 11, 12 sind über Querstäbe 18, 19 miteinander verbunden. Die beiden oberen Querstäbe 18 können als Auflage für einen aufzusetzenden Drahtgitterkorb dienen.

An den vorderen Enden der Trägerabschnitte 13, 14 sind jeweils Aufnahmeelemente 21, 22 vorgesehen, die nach außen weisen. Sie ermöglichen die Aufnahme der Pendelachsen 16, 17, an denen die Rolleneinheiten aufgehängt sind, seitlich neben den Trägerabschnitten 13, 14.

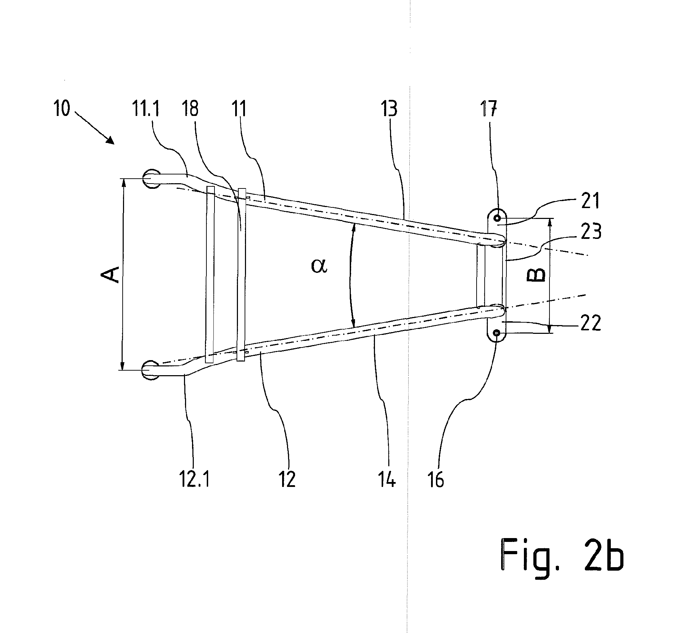

Die Draufsicht in Figur 2b zeigt wiederum den Anstellwinkel α, in welchem die Trägerabschnitte 13, 14 zueinander positioniert sind.

Sichtbar ist weiterhin, dass die Träger 11, 12 jeweils im hinteren Bereich an einem Punkt 11.1, 12.1 gekröpft sind. Die rückwärtigen Abschnitte der Träger 11, 12, an deren Enden die hinteren Rolleneinheiten anzubringen sind, verlaufen in etwa parallel zueinander; ihr Abstand entspricht der hinteren Spurweite A, die mit der Spurweite A' herkömmlicher Fahrgestelle (vgl. Fig. 1b) übereinstimmen kann. Ebenso kann die Spurweite B der vorderen Rolleneinheit der Spurweite B' herkömmlicher Fahrgestelle entsprechen. Wenn also gleichartige Drahtkörbe bei einem herkömmlichen Fahrgestell 10' und einem Fahrgestell 10 der Erfindung aufgesetzt werden, um einen Einkaufswagen auszubilden, dann ergibt sich gemäß der Erfindung eine gleichartige Standsicherheit, obschon der Winkel α bei dem erfindungsgemäßen Fahrgestell 10 größer ist und die Einheit der vorderen Trägerabschnitte 13, 14 dadurch schmaler sind.

Wie die Seitenansicht in Fig. 2c zeigt, ergibt sich ein Stapelmaß S bei den erfindungsgemäßen Fahrgestellen 10, das kleiner ist als das Stapelmaß S' herkömmlicher Fahrgestelle 10'.

Beispielsweise ergibt sich bei einem Fahrgestell für einen Drahtkorb mit 210 Litern Fassungsvermögen, das eine Spurweite von ca. A = 500 mm und von ca. B = 300 mm aufweist, ein Stapelmaß S= 135 mm, wohingegen bei dem Fahrgestell gemäß dem Stand der Technik bei ansonsten gleichartigen Maßen das Stapelmaß größer als 200 mm ist.

Figur 3 zeigt das Fahrgestell 10, das mit vorderen Rolleneinheiten 1, 2 und hinteren Rolleneinheiten 3, 4 ausgestattet ist, in der Vorderansicht.

Das Maß H bezeichnet den Abstand von der größten seitlichen Ausdehnung, die am hinteren Ende des Fahrgestells 10 gegeben ist, zum vorderen Ende des Trägers 12. Das Maß G bezeichnet, ebenfalls ausgehend von der Seitenkante hinten, den Abstand zur Achse 18 der Rolleneinheit 2, die an dem vorspringenden Aufnahmeelement 21 gelagert ist. Deutlich erkennbar ist, dass hier eine Differenz zwischen den Maßen H und G von etwa einem Drittel bestimmt. Um diese Längendifferenz sind die Achsen 17, 18 der Rolleneinheiten 1, 2 nach außen versetzt.

Die Mittellinien 11.2, 12.2 kennzeichnen Profilquerschnittsachsen der Träger 11, 12. Die Profile sind mit ihrer Längserstreckung nicht vertikal, sondern um einen Winkel β geneigt ausgerichtet.

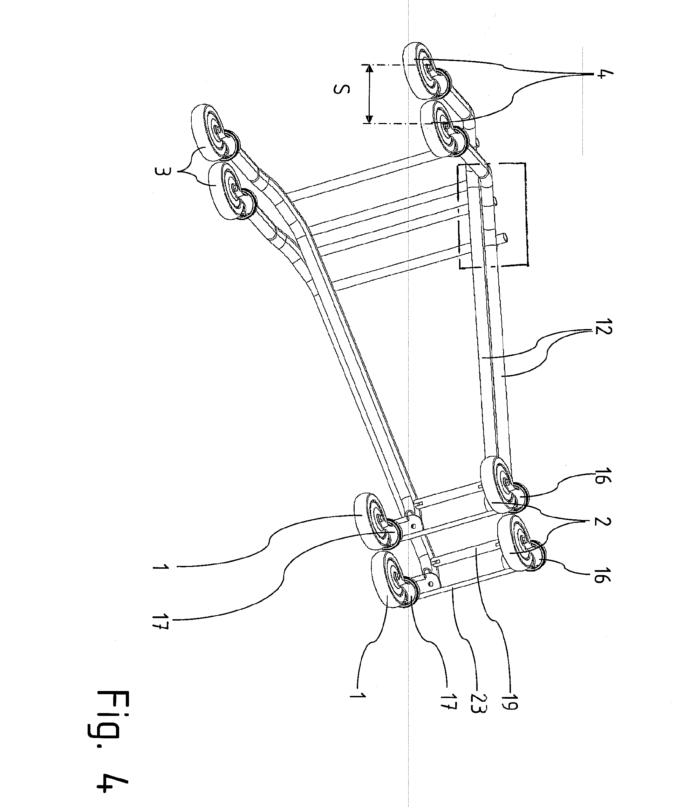

Fig. 4 zeigt zwei ineinander gestapelte Fahrgestelle 10, die jeweils mit Rolleneinheiten 1, 2, 3, 4 ausgerüstet sind.

Die Fahrgestelle 10 lassen sich soweit ineinander schieben, dass das Stapelmaß S nicht durch aneinander liegende Träger 11, 12 der Fahrgestelle 10 bestimmt wird, sondern durch die größte Ausdehnung der Rolleneinheit in Längsrichtung.

Bei dem in Figur 4 gezeigten Ausführungsbeispiel ragen die Rollen aus den Rolleneinheiten 1, 2, 3, 4 heraus. Damit können die Laufflächen der Rollen auch unmittelbar die Anschlagelemente für ineinander gestapelte Fahrgestelle 10 bilden, soweit nicht sonstige Anschlagelemente am Fahrgestell oder am daraus gebildeten fertigen Einkaufswagen vorgesehen sind. Das kleinste mögliche Stapelmaß S bei der Erfindung entspricht somit dem Rollendurchmesser bzw. der Längsausdehnung der Rolleneinheit.

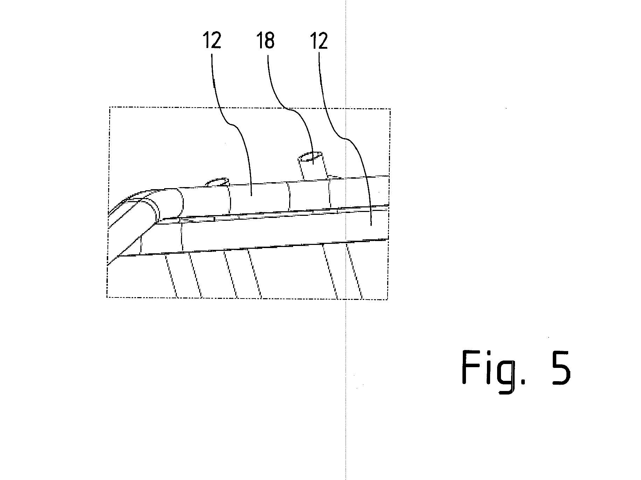

Durch die Abstandhaltung über die Rolleneinheiten 1, 2, 3, 4 und die Profilschrägstellung der Träger 11, 12 wird zudem erreicht, dass sich die Träger 11, 12 im Stapel nicht mehr berühren, wie insbesondere Figur 5 als vergrößerter Ausschnitt aus Figur 4 zeigt. Zwischen den beiden dort sichtbaren rechten Trägern 12 ist ein Spalt gegeben, durch welchen hindurch Teile des dahinter liegenden Querstabs 18 sichtbar sind.

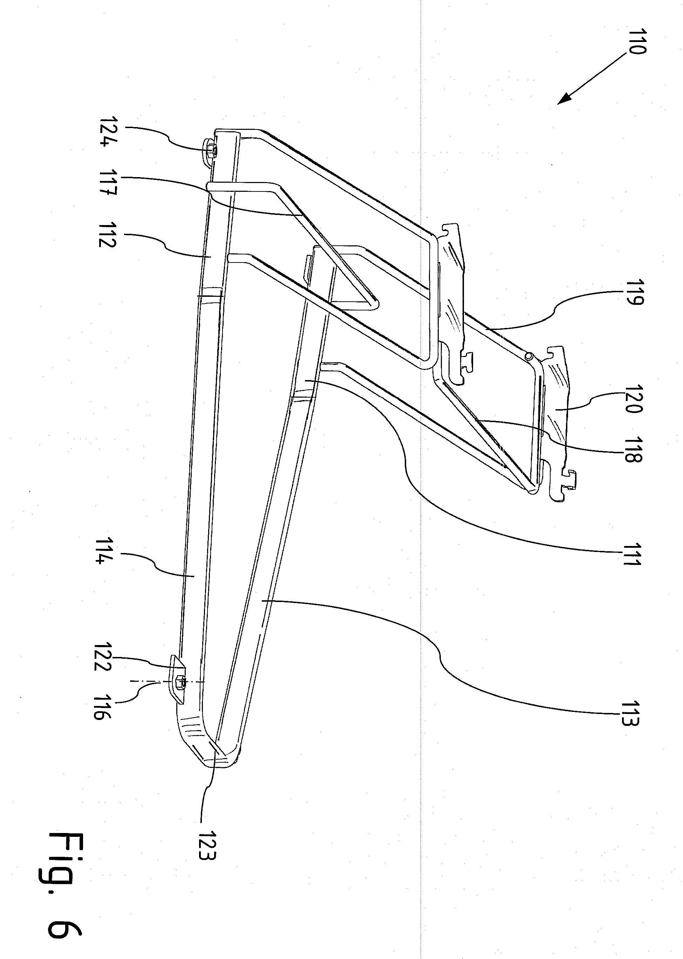

Fig. 6 zeigt ein stapelbares Fahrgestell 110 für einen Einkaufswagen gemäß einer zweiten Ausführungsform. Auf der linken Seite, in Fahrtrichtung gesehen, ist ein Träger 111 vorgesehen, auf der rechten Seite ein Träger 112. An einem Knickpunkt, der etwa unterhalb der zur Befestigung des Drahtkorbs vorgesehen Verbindungslasche 120 liegt, sind die Träger 112, 111 gekröpft. Es schließen sich die vorderen Trägerabschnitte 113, 114 an, die an einem gemeinsamen Traversenelement 123 münden. Im Bereich des Übergangs der vorderen Trägerabschnitte 113, 114 zu dem Traversenelement 123 sind seitlich auskragende Aufnahmeelemente 122 angebracht, in denen die Achsen 116 für die Rolleneinheiten angeordnet sind. Im rückwärtigen Bereich sind ebenfalls Aufnahmeelemente 124 an die Träger 112 angebracht.

Im rückwärtigen Bereich ist eine Queraussteifung 117 vorgesehen, welche den linken und den rechten Träger 111, 112 miteinander verbindet. Von den hinteren Endbereichen der Träger 111, 112 aufsteigend sind Haltebügel 119 angebracht, die im oberen Bereich über einen horizontalen Bügel 118 miteinander verbunden sind. Die Haltebügel 119 tragen die Befestigungslaschen 120, an denen zur Ausbildung des fertigen Einkaufswagens ein Drahtkorb angebracht wird.

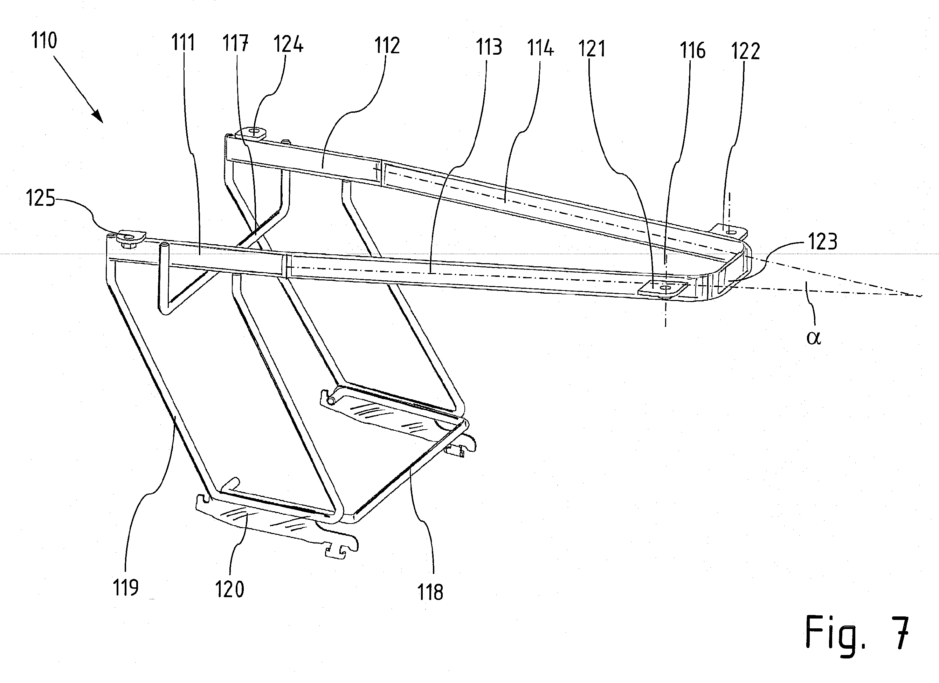

Während in Fig. 6 nur die Aufnahmeelemente für die Rolleneinheiten an der rechten Seite des Fahrgestells erkennbar sind, zeigt der Blick auf die Unterseite des Fahrgestells in Fig. 7 beide Aufnahmeelemente 121, 122 an den vorderen Trägerabschnitten sowie auch beide Aufnahmeelemente 124, 125 im hinteren Bereich.

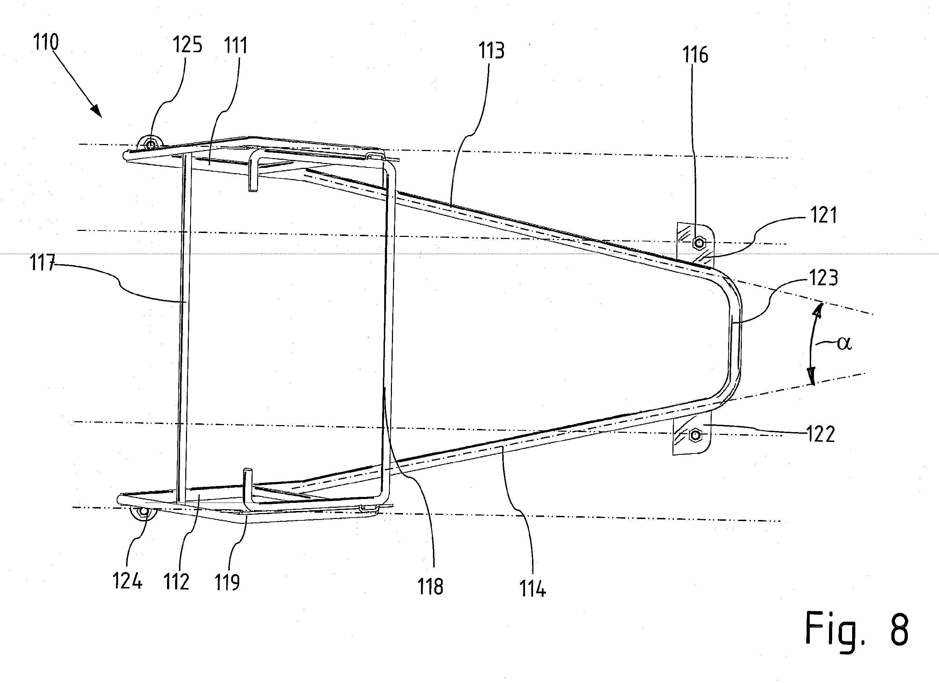

Die Draufsicht in Fig. 8 zeigt deutlich die Konfiguration der Träger 111, 112 des erfindungsgemäßen Fahrgestells 110 gemäß einer zweiten Ausführungsform. Die vorderen Trägerabschnitte 113, 114 sind in einem solch großen Winkel α zu einander angestellt, dass sich der Schnittpunkt der Mittelachsen nur wenig vor dem Traversenelement 123 ergibt. Auch die hinteren Abschnitte der Träger 111, 112 sind, wie in Fig. 8 ebenfalls erkennbar, schräg in einem spitzen Winkel α von etwa 25° zueinander ausgerichtet. Hierdurch kann bei einer üblichen Länge des Fahrgestells, gemessen zwischen den vorderen Aufnahmeelementen 121, 122 und den hinteren Aufnahmeelementen 124, 125 ein verkürzter Stapelabstand erreicht werden.

Die parallelen strichpunktierten Linien deuten die Richtungen an, in denen sich die vorderen und hinteren Rolleneinheiten bewegen, wenn zwei Fahrgestelle 110 ineinander gestapelt werden. Der Abstand dazwischen ist so groß, dass es zu keiner gegenseitigen Behinderung der Rolleneinheiten kommt.

Das in den Fig. 6 bis 8 dargestellte Ausführungsbeispiel eines Fahrgestells 110 besitzt Träger 111, 112, die gemeinsam mit dem verbindenden Traversenelement 123 aus einem Rohrprofil gefertigt sind.

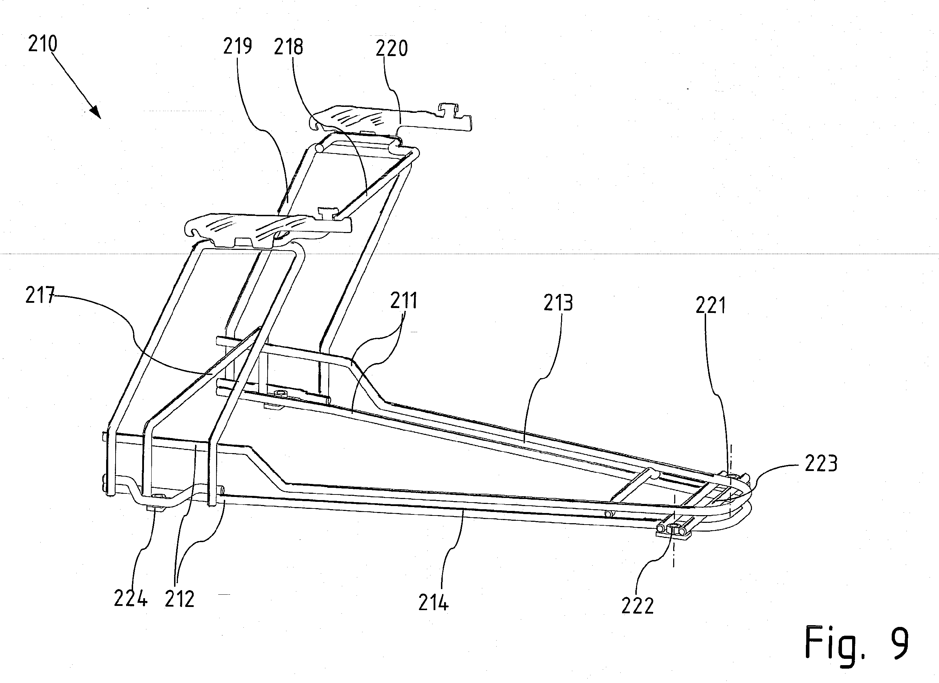

In den Fig. 9 bis 11 ist ein weiteres Fahrgestell 210 gemäß einer dritten Ausführungsform gezeigt, bei dem die Träger ebenfalls in einer unteren, zur Fahrebene parallelen Ebene angeordnet sind, sodass unterhalb des Drahtkorbs des Einkaufswagens eine zusätzliche Ablage auf dem Fahrgestell 210 angeordnet werden kann.

Unterschiedlich im Vergleich zu dem Fahrgestell 110 gemäß den Fig. 6 bis 8 ist hier, dass Träger 211, 212 vorgesehen sind, die aus zwei starken Stahldrähten gebildet sind, welche in einem Abstand zueinander geführt sind.

Die beiden vorderen Trägerabschnitte 213, 214 sind V-förmig zueinander angestellt und gehen direkt ineinander über. Ein Traversenelement 223 ist etwas rückwärtig des Knickpunktes zwischen den vorderen Trägerabschnitten 213, 214 angeordnet. Das Traversenelement 223 besteht aus zwei parallelen Drahtabschnitten die zwischen den beiden Drahtabschnitten, aus denen die Träger 211, 212 gebildet sind, positioniert und verschweißt sind. Die Querstäbe des Traversenelements 223 tragen an ihren Enden die Aufnahmeelemente 221, 222 zur Aufnahme der Rolleneinheiten.

Am rückwärtigen Ende des Fahrgestells 210 sind weitere Aufnahmeelemente 224 für Rolleneinheiten vorgesehen. Vom hinteren Bereich der Träger 211, 212 aus erstreckt sich ein Haltebügel 219 nach oben. Ein Querbügel 217 sorgt für eine Queraussteifung im unteren Bereich; ein Querbügel 218 für eine Aussteifung im oberen Bereich. Am oberen Ende der Haltebügel 219 sind Befestigungslaschen 220 zur Aufnahme und Befestigung des Drahtkorbes vorgesehen.

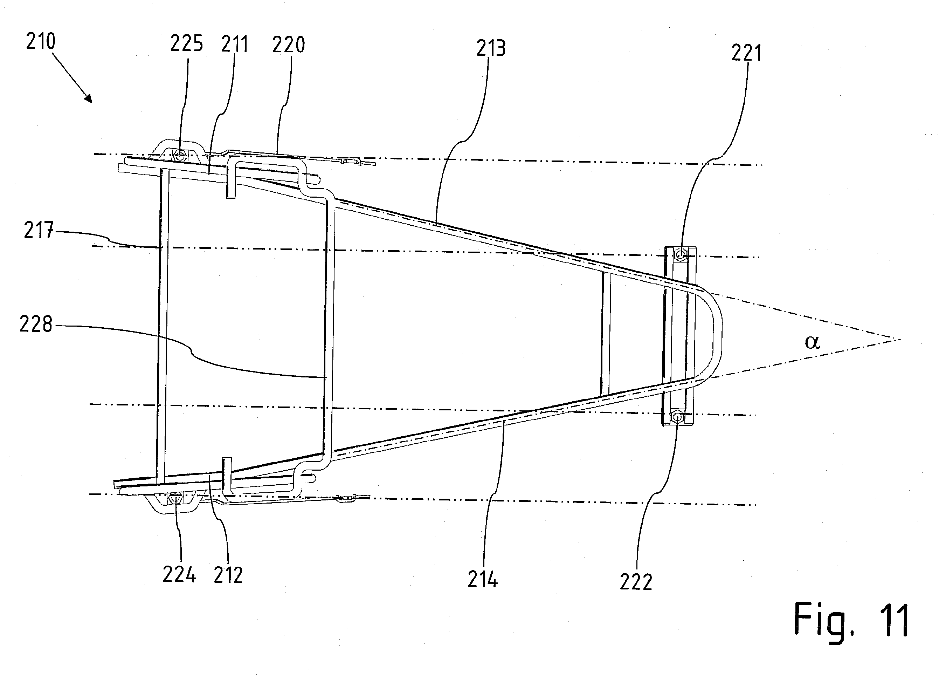

Fig. 11 zeigt wiederum eine Draufsicht auf das Fahrgestell 210. Deutlich erkennbar ist, dass die hinteren Abschnitte der Träger 211, 212, die noch in einem kleineren Winkel zueinander angestellt sind, sehr kurz sind. Sie erstrecken sich nur noch etwa bis zu dem Punkt nach vorne, an dem in der Ebene darüber die Verbindungslaschen 120 ihr hinteres Ende haben. Von dort aus erstrecken sich bereits die in einem deutlich größeren Winkel α zueinander angestellten vorderen Trägerabschnitte 213, 214 nach vorn, sodass die V-Form noch deutlicher ausgeprägt sein kann als bei dem Ausführungsbeispiel des Fahrgestells 110 nach den Fig. 6 bis 8..

Durch die Anordnung der Aufnahmeelemente 221, 222 an den beiden Querstäben, welche das Traversenelement 223 ausbilden, ist es sehr einfach möglich, die Aufnahmeelemente 221, 222 weitest möglich nach außen zu verlagern, um eine möglichst große Abstützbreite der vorderen Rolleneinheiten bei gleichzeitig geringem Stapelmaß des Fahrgestells 210 zu erreichen.

## Patentansprüche

1. Stapelbares Fahrgestell (10; 110; 210) für einen Einkaufswagen, welches wenigstens zwei nach vorn weisende Träger (11, 12; 111, 112; 211, 212) umfasst, von denen wenigstens die in Fahrtrichtung gesehen vorderen Trägerabschnitte (13, 14; 113, 114; 213, 214), an deren Enden jeweils eine vordere Rolleneinheit (1, 2) angeordnet ist, in einem spitzen Winkel α zueinander ausgerichtet sind,
**dadurch gekennzeichnet, dass** die vorderen Rolleneinheiten (1, 2) seitlich neben den vorderen Trägerabschnitten (13, 14; 113, 114; 213, 214) angeordnet sind.

2. Fahrgestell (10; 110; 210) nach Anspruch 1, **dadurch gekennzeichnet, dass** an den vorderen Trägerabschnitten (13, 14; 113, 114; 213, 214) jeweils wenigstens ein nach außen kragendes Aufnahmeelement (21, 22; 121, 122; 221, 222) vorgesehen ist, an dem die vorderen Rolleneinheiten (1, 2) gelagert sind.

3. Fahrgestell (10; 110; 210) nach Anspruch 1 oder 2, **dadurch gekennzeichnet, dass** die vorderen Trägerabschnitte (13, 14; 113, 114; 213, 214) über wenigstens ein Traversenelement (19, 23; 123) miteinander verbunden sind.

4. Fahrgestell nach Anspruch 1 oder 2, **dadurch gekennzeichnet, dass** die nach außen kragenden Aufnahmeelemente einstückig mit einem Traversenelement ausgebildet sind, welches die vorderen Trägerabschnitte verbindet.

5. Fahrgestell (10; 110; 210) nach wenigstens einem der Ansprüche 2 bis 4, **dadurch gekennzeichnet, dass** an den auskragenden Aufnahmeelementen (21, 22; 121, 122; 221, 222) Pendelachsen (16, 17) angeordnet sind, an denen die vorderen Rolleneinheiten (1, 2) aufgehängt sind.

6. Fahrgestell (10; 110; 210) nach einem der Ansprüche 1 bis 5, **dadurch gekennzeichnet, dass** das Stapelmaß (S) der Fahrgestelle (10; 110; 210) kleiner ist als oder gleich ist wie der Abstand von zwei in Längsrichtung der Fahrgestelle aneinander gereihten vorderen und/oder hinteren Rolleneinheiten (1, 2, 3, 4).

7. Fahrgestell (210) nach wenigstens einem der Ansprüche 1 bis 6, **dadurch gekennzeichnet, dass** die Träger (211, 212) jeweils aus parallelen Stahldrähten gebildet sind.

8. Fahrgestell (10; 110) nach wenigstens einem der Ansprüche 1 bis 6, **dadurch gekennzeichnet, dass** die Träger als Rohrbügel (11, 12; 11', 12'; 111, 112) aus einem Rohrprofil ausgebildet sind.

9. Fahrgestell (10; 110) nach Anspruch 8, **dadurch gekennzeichnet, dass** zumindest die vorderen Trägerabschnitte (13, 14) der Rohrbügel (11, 12; 11', 12'; 111, 112) einen langgestreckten Profilquerschnitt aufweisen, wobei die langen Profilachsen (11.2, 12.2) um einen Winkel β = 10°...30° gegenüber einer Vertikalen geneigt angeordnet sind.

10. Fahrgestell (10; 110) nach Anspruch 8 oder 9, **dadurch gekennzeichnet, dass** die Rohrbügel (11, 12; 11', 12'; 111, 112) gekröpft sind oder konkav ausgebildet sind, wobei die konkave Seite jeweils nach außen weist.

11. Fahrgestell (10; 110) nach wenigstens einem der Ansprüche 1 bis 10, **dadurch gekennzeichnet, dass** sich die Träger (11, 12; 111, 112) von wenigstens einem erhöhten Befestigungselement zur Verbindung mit einem Gitterkorb aus nach vorn und nach hinten abgespreizt sind und sich schräg nach unten zu den Aufnahmeelementen (21, 22; 111, 112) für die vorderen Rolleneinheiten (1, 2, 3, 4) erstrecken.

12. Fahrgestell (110; 210) nach wenigstens einem der Ansprüche 1 bis 10, **dadurch gekennzeichnet, dass** sich die Träger (111, 112; 211; 212) von einem erhöhten Befestigungsbereich zur Verbindung mit einem rückwärtigen Bereich eines Gitterkorbs aus nach unten und im Wesentlichen parallel zur Fahrebene nach vorn zu den zu den Aufnahmeelementen (121, 122; 221, 222) für die vorderen Rolleneinheiten erstrecken.
